# EUROPÄISCHE PATENTSCHRIFT

(11) **EP 0 631 546 B1**
(45) Veröffentlichungstag und Bekanntmachung des Hinweises auf die Patenterteilung: **11.06.1997**
(21) Anmeldenummer: 93905086.0
(22) Anmeldetag: 22.03.1993
(51) Int. Cl.: B60S 1/08, H02K 33/00

(54) **SCHEIBENWISCHERANLAGE**
WINDSCREEN WIPER SYSTEM
ESSUIE-GLACE

(30) Priorität: 23.03.1992 AT 586/92
(43) Veröffentlichungstag der Anmeldung: 04.01.1995
(73) Patentinhaber: BATTLOGG, Stefan, A-6771 St. Anton im Montafon (AT)
(72) Erfinder: BATTLOGG, Stefan, A-6771 St. Anton im Montafon (AT)
(74) Vertreter: Torggler, Paul, Dr.
(86) Internationale Anmeldenummer: AT9300054
(87) Internationale Veröffentlichungsnummer: WO9318944

(56) Entgegenhaltungen:
- EP-A- 0 531 793
- DE-A- 4 021 669
- DE-A- 4 104 565
- US-A- 4 866 357
- PATENT ABSTRACTS OF JAPAN vol. 15, no. 53 (M-1079) 7. Februar 1991; & JP,A,02 286452 (OMRON TATEISI ELECTRON CO) 26 November 1990

## Beschreibung

Die Erfindung betrifft eine Scheibenwischeranlage mit einem schwenkbar gelagerten Wischerarm und mit einem den Wischerarm schwenkenden Antrieb, der einen fahrzeugfest montierbaren, drehrichtungsumkehrbaren Elektromotor und eine den Elektromotor schaltende Steuerung aufweist (Siehe DE-A-4 104 565).

Die Scheibenwischeranlagen werden üblicherweise von einem Elektromotor angetrieben, dessen Drehbewegung über ein Getriebe und eine Kurbel in eine hin- und hergehende Bewegung des Wischerarmes umgesetzt wird. Jeder Kurbeltrieb ist für einen bestimmten Wischwinkel ausgelegt, und Anpassungen an wechselnde Umgebungs- und Betriebsbedingungen sind kaum bzw. nur mit hohem Aufwand möglich. Eine Scheibenwischeranlage sollte jedoch an eine größere Anzahl unterschiedlicher und teilweise auch miteinander unvereinbarer Parameter angepaßt sein, zu denen etwa die Wischgeschwindigkeit, die Größe des Wischfeldes, die Parkstellung, die Reibung des Wischerblattes auf der Scheibe, Beschleunigungs- und Verzögerungswerte im Umkehrbereich usw., gehören. Um eine Überlastung durch Schnee usw. zu vermeiden, ist aus der DE-A 41 04 565 eine Wischeranlage der eingangs genannten Art bekannt, bei der bei Ermittlung eines Überstromes eine vorzeitige Bewegungsumkehr stattfindet.

Aus der DE-A 40 21669 ist ein aus zwei halbschalenartigen Teilen bestehendes Gehäuse für einen Scheibenwischermotor oder anderen elektrischen Antrieb bekannt, wobei die beiden Teile nach dem Einsetzen des Motors und eines Untersetzungsgetriebes durch Verriegelungselement aneinander fixiert werden. Die Antriebswelle des Motors tritt durch eine entsprechende Öffnung in einen der beiden Teile aus. Das Gehäuse wird in üblicher Weise an der Karosserie befestigt, d.h. ein Gehäuseteil ist fahrzeugfest montierbar. Eine Drehrichtungsumkehr des Elektromotors und eine Steuerung hiefür ist nicht vorgesehen, da das Gehäuse auch für andere Antriebsmotoren geeignet sein soll.

Die Erfindung hat es sich daher zur Aufgabe geste lt, eine Scheibenwischeranlage weiter zu verbessern, und schlägt, um den vorstehenden Forderungen besser gerecht zu werden, vor, daß ein zweiteiliges Gehäuse vorgesehen ist, daß der eine Gehäuseteil den Statorteil des Elektromotors trägt und fahrzeugfest montierbar ist, und der zweite Gehäuseteil mit dem Rotorteil versehen, relativ zum ersten Gehäuseteil verdrehbar und mit dem Wischerarm verdrehfest verbunden ist.

Die Verwendung eines zweiteiligen Gehäuses für den drehrichtungsumkehrbaren Elektromotor führt vor allem zu konstruktiven Vorteilen, da der vom Motor angetriebene zweite Gehäuseteil direkt dem Wischerarm zugeordnet ist. Es erübrigen sich Bauteile, wie Kurbelgetriebe, Halterungen usw., es wird Platz gespart, und die Montage wird vereinfacht.

In einer ersten Ausführung ist vorgesehen, daß mit dem zweiten Gehäuseteil eine Lagerhülse verbunden ist, die auf einem Tragzapfen gelagert ist, der auf dem fahrzeugfest montierbaren Gehäuseteil angeordnet ist. Dadurch bilden Antrieb und Wischerarmlagerung eine einfache und leicht montierbare Baueinheit. In einer bevorzugten Ausführung ist vorgesehen, daß der fahrzeugfest montierbare Gehäuseteil topfförmig und der mit dem Rotorteil versehene zweite Gehäuseteil deckelartig ausgebildet sind. Die Topfwand weist dann bevorzugt den Statorteil des Elektromotors auf.

Besonders kompakt wird die Scheibenwischeranlage, wenn der Statorteil am Tragzapfen vorgesehen ist, und der zweite Gehäuseteil topfförmig ausgebildet ist und einen außenliegenden Rotorteil bildet oder, wenn die Motorabtriebswelle die Lagerhülse des Wischerarmes bildet. In beiden Ausführungen umgibt der Motor den Tragzapfen, der auf dem Grundkörper fixiert ist.

Stellt die Motorabtriebswelle nicht die Lagerhülse des Wischerarmes dar, so sieht eine weitere bevorzugte Ausführung vor, daß zwischen der Motorabtriebswelle und der Lagerhülse ein Zwischengetriebe ausgebildet ist. In bezug auf den Schwenkwinkel des Wischerarmes wird dadurch der Drehwinkel des Elektromotors im Untersetzungsverhältnis des Zwischengetriebes vergrößert und kann exakter eingestellt werden. Dies kann ein Stirnradgetriebe, bevorzugt ein Planetengetriebe sein. Weiters verringert sich das erforderliche Antriebsmoment des Elektromotors, sodaß dieser kleiner gebaut werden kann. Eine platzsparende Unterbringung läßt sich erzielen, wenn die Topfwand des fahrzeugfest montierbaren Gehäuseteiles oder der außenliegende Rotorteil mit dem Hohlrad eines Planetengetriebes versehen ist und der zweite Gehäuseteil einen Tragflansch für die Planetenräder aufweist.

Eine weitere Ausführung sieht vor, daß der Tragzapfen axial verstellbar auf dem fahrzeugfest montierbaren Gehäuseteil angeordnet ist. Dies gestattet es, Scheibenwischeranlagen zu konzipieren, bei denen beispielsweise der Wischerarm aus einer vertieften Parkstellung ausgefahren werden kann, bei denen durch die axiale Verschiebung ein Parameter, etwa die Anpreßkraft des Wischerblattes verändert werden kann, oder bei denen durch die axiale Verschiebung eine Umschaltung etwa zwischen der Wischerbewegung in der Arbeitsstellung und einer Verschwenkung in eine Parkstellung erzielt werden kann.

Die axiale Verschiebung kann in beliebiger Weise erfolgen, beispielsweise mittels eines Elektromotors, eines Elektromagneten, einer Feder mit Memoryeffekt, über ein Druckmedium usw., wobei auch diese durch die Antriebssteuerung gesteuert werden kann. Die Rückstellung in die Ausgangslage kann über den Wischerantrieb oder auch über eine Rückstellfeder erfolgen.

Für die erwähnte Umschaltung der Verschwenkung zwischen der Arbeits- und der Parkstellung sieht eine bevorzugte Ausführung vor, daß am Tragzapfen ein in Achsrichtung verstellbarer Mitnehmer vorgesehen ist, der in einer ersten Position den Tragzapfen mit dem ersten, fahrzeugfest montierbaren Gehäuseteil und in einer zweiten Position den Tragzapfen mit der Lagerhülse und dem zweiten Gehäuseteil verdrehfest verbindet. Dadurch kann der Elektromotor des Wischerantriebs in der Arbeitsstellung den Wischerarm über den benötigten Wischwinkel hin- und herbewegen und über einen anderen, beliebig wählbaren Winkel in die Parkstellung bewegen.

Die Steuerschaltung des Elektromotors enthält bevorzugt eine Fuzzy-Logik und gegebenenfalls auch ein neuronales Netzwerk. Die Scheibenwischeranlage kann dann in der Lage sein, sich immer besser an die vorgegebenen Parameter und die sich ergebenden Betriebsbedingungen anzupassen.

Insbesondere sind durch die Erfindung Scheibenwischeranlagen realisierbar, bei denen das Wischerblatt sich relativ zum Wischerarm verdreht, während dieser über die Scheibe schwenkt und dabei seine Länge ändert, sodaß das Wischerblatt zumindest annähernd parallel geführt wird und das Wischfeld je nach Scheibenform rechteckig bis trapezförmig ist. Bei derartigen Scheibenwischeranlagen kann eine harmonische Wischerblattbewegung erzielt werden, wenn es zu den Umkehrbereichen hin verzögert und nach der Umkehr wieder beschleunigt wird. Hiefür wird der Elektromotor vorteilhaft in sehr kleinen Schritten mit Stromimpulsen gespeist, deren Größe variierbar und von der Steuerung festgelegt werden. Hier bewirkt die Ausbildung eines Planetengetriebes zwischen der Motorabtriebswelle und der Lagerhülse zusätzliche Vorteile, da sich der Antrieb durch die erhöhte Anzahl von Winkelschritten weiter verfeinern läßt.

Die Steuerung kann folgende fixe und variable Größen berücksichtigen: Länge und Längenänderung des Wischerarmes; Winkel und Winkeländerung des Wischerblattes zum Wischerarm; Anpreßkraft und Anpreßkraftänderung des Wischerblattes in Abhängigkeit von der Geschwindigkeit des Fahrzeuges sowie des Wischerblattes; Wischwinkel und Wischwinkeländerung; Schwenkwinkel in die Parkstellung; Winkelgeschwindigkeit und Winkelgeschwindigkeitsänderung des Wischerarmes; Massenkräfte und Massenkräfteänderungen der Wischeranlage; Reibung und Reibungsänderungen zwischen Scheibe und Wischerblatt; Wischintervall und Wischintervalländerungen; usw.

Nachstehend wird nun die Erfindung an Hand der Figuren der beiliegenden Zeichnungen näher beschrieben, ohne darauf beschränkt zu sein.

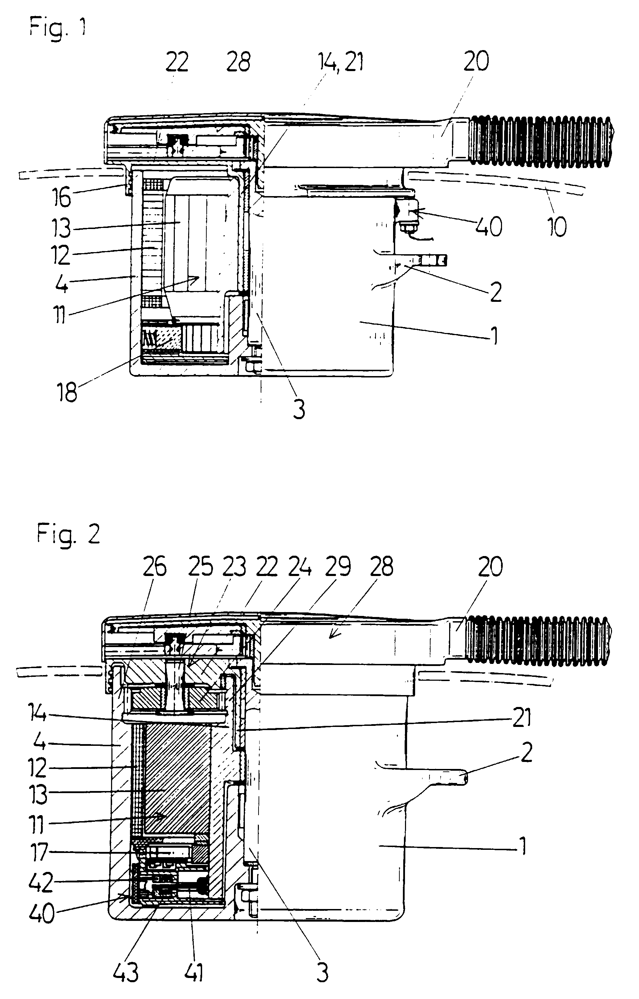

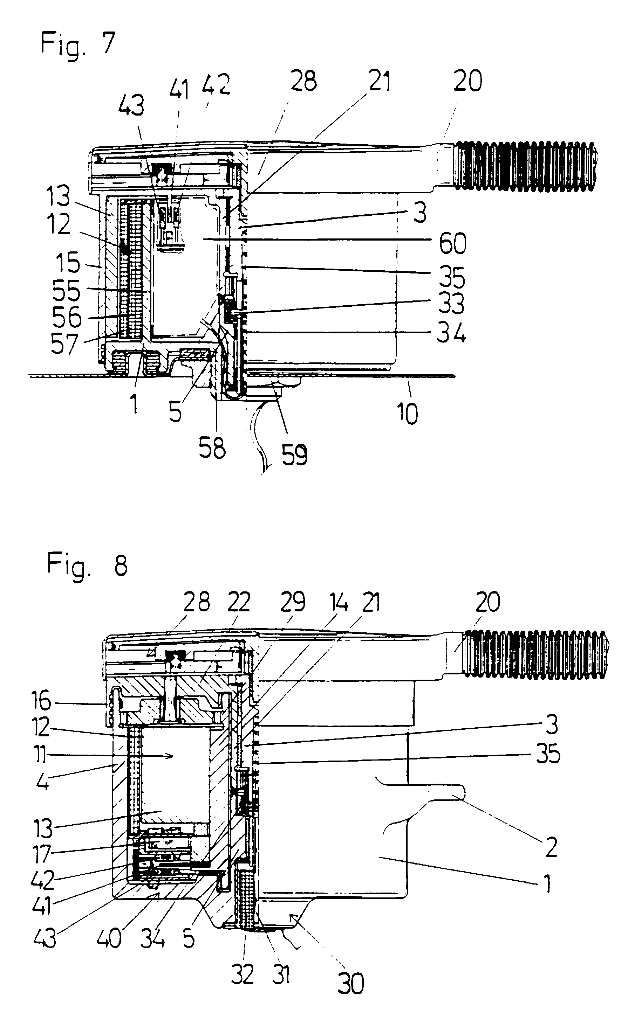

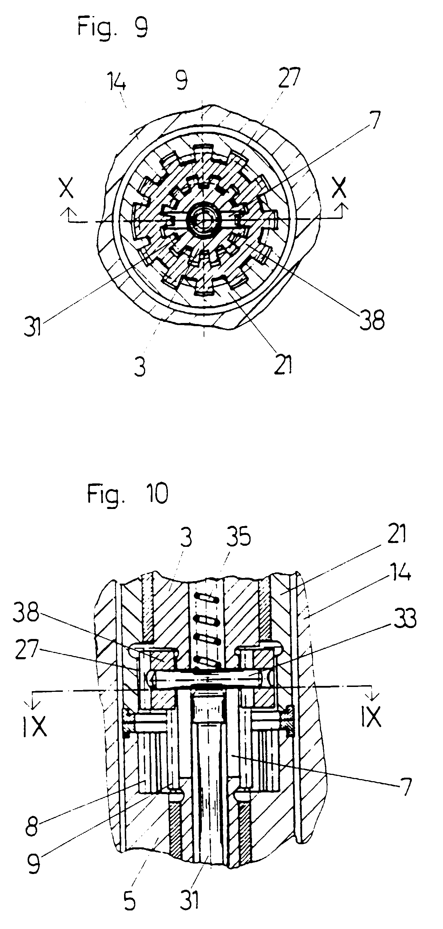

Die Fig. 1 bis 8 zeigen Teilaxialschnitte durch verschiedene Ausführungsbeispiele der erfindungsgemäßen Scheibenwischeranlage, die Fig. 9 einen Schnitt nach der Linie IX-IX der Fig.10, entsprechend den Ausführungsbeispielen nach Fig. 7 und 8, und Fig. 10 einen Schnitt ab der Linie X-X der Fig. 9.

Eine Scheibenwischeranlage weist einen Wischerarm 20 mit einem Wischerblatt auf, der einen mit einer Lagerhülse 21 versehenen Lagerteil 28 aufweist. Die Lagerhülse 21 ist auf einem Tragzapfen 3 angeordnet, der mittig von einem ersten Gehäuseteil 1 hochsteht. Der erste Gehäuseteil 1 ist mit Montagelaschen 2 versehen, mittels denen er innerhalb der Karosserie 10 fahrzeugfest montierbar ist. Ein Elektromotor 11, der insbesondere ein Gleichstrommotor ist, weist eine Hohlwelle als Abtriebswelle 14 auf, die koaxial zum Tragzapfen 3 liegt, sodaß der Elektromotor den Tragzapfen 3 umgibt. Dem Elektromotor 11 ist eine Drehwinkelerfassungseinrichtung 40 zugeordnet, über die die Größe des Drehwinkels und die jeweiligen Umkehrpunkte bestimmt werden. Der Lagerteil 28 bildet ein Getriebegehäuse für ein Steuergetriebe des Wischerarmes 20. Das Steuergetriebe setzt eine Relativverdrehung zwischen dem Lagerteil 28 des Wischerarmes 20 und einem mit dem Tragzapfen 3 verbundenen, in das Getriebegehäuse ragenden Teil in eine Längenänderung des Wischerarmes 20 und eine Verdrehung des Wischerblattes um, so daß dieses eine Windschutz; scheibe im wesentlichen vollflächig überstreicht. Die Ausbildung des Wischerarmes 20 ist jedoch für das Verständnis der vorliegenden Erfindung nicht wesentlich, sodaß eine detaillierte Beschreibung entfallen kann. Die Lagerhülse 21 kann daher auch an jeder anderen Ausführung eines schwenkbaren Wischerarmes vorgesehen sein.

In der Ausführung nach Fig. 1 ist der erste Gehäuseteil 1 topfförmig ausgebildet, und die Topfwand 4 trägt den Statorteil 12 des Elektromotors 11. Bürsten 18 sind im Bodenbereich vorgesehen. Der Rotorteil 13 des Elektromotors 11 ist in dieser Ausführung an der Lagerhülse 21 fixiert, die daher gleichzeitig die Abtriebswelle 14 darstellt. Die Lagerhülse 21 trägt einen Flansch, der als zweiter Gehäuseteil 22 einen mit einem Abdichtflansch 16 versehenen Deckel des ersten topfförmigen Gehäuseteiles 1 bildet und relativ zum ersten Gehäuseteil 1 verdrehbar ist. Der zweite Gehäuseteil 22 wird daher vom Motor gedreht, und bildet daher gleichzeitig den Boden des mit dem Wischerarm 20 verbundenen Lagerteiles 28. Die Drehwinkelerfassungseinrichtung 40 befindet sich an der Außenseite des ersten Gehäuseteiles 1 zwischen der Topfwand 4 und dem den Deckel bildenden zweiten Gehäuseteil 22.

In der Ausführung nach Fig. 2 ist zwischen der Motorabtriebswelle 14 und der Lagerhülse 21 ein Planetengetriebe 23 ausgebildet. Die Lagerbüchse 21 ist koaxial innerhalb der Abtriebswelle 14 angeordnet und mit dem den Boden des Lagerteiles 28 und den Deckel des ersten Gehäuseteiles 1 bildenden zweiten Gehäuseteil 22 versehen, in dem Achsen 25 angeordnet sind, die Planetenräder 24 tragen. Die Abtriebswelle 14 bildet das Sonnenrad des Planetengetriebes und die Topfwand 4 ist mit dem Innenzahnrad oder Hohlrad 26 versehen. Eine Untersetzung von beispielsweise 1:4 bis 1:5 erlaubt es, den Drehwinkel des Elektromotors 11 gegenüber dem Wischwinkel zu vervier- bzw. zu verfünffachen, sodaß dessen Steuerung verfeinert werden kann. Der Elektromotor 11 ist weiters elektronisch kommutierbar und enthält keine Bürsten, sondern Hallsensoren 17. Die Drehwinkelerfassungseinrichtung 40 ist im Inneren des ersten Gehäuseteiles 1 angeordnet und umfaßt ein mitdrehendes Lochelement 41, eine Lichtquelle 42 und einen Lichtsensor 43. Der übrige Aufbau entspricht dem Aufbau der Ausführung nach Fig. 1.

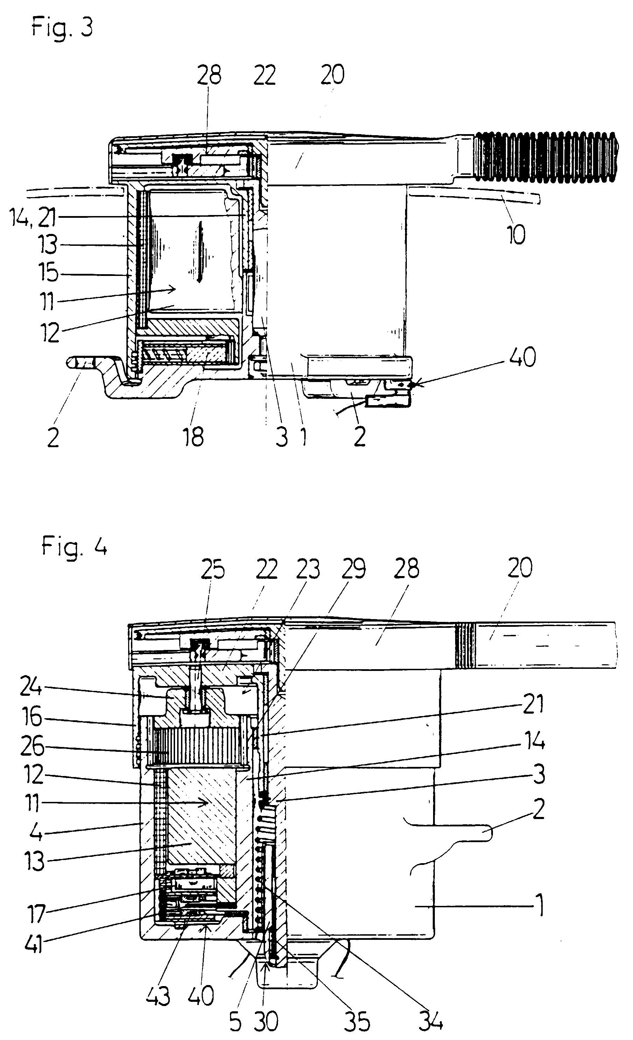

Fig. 3 zeigt eine Ausführung, die entsprechend der Ausführung von Fig. 1 ohne Planetengetriebe ausgebildet ist. Der Unterschied besteht darin, daß der den Lagerteil 28 bildende zweite Gehäuseteil 22 topfförmig ausgebildet ist und einen Boden, an dem die Lagerhülse 21 mittig vorgesehen ist, sowie eine Außenwand 15 aufweist. Die Außenwand 15 trägt den Rotorteil 13 des Elektromotors 11, dessen Statorteil 12 am Tragzapfen 3 verdrehfest gehalten ist. Der erste Gehäuseteil 1 weist die Form einer Platte auf, die den dichtend eingesetzten, fahrzeugfest montierbaren Deckel des topfförmigen zweiten Gehäuseteiles 22 bildet. Der Einbau eines Planetengetriebes 23 ist auch in dieser Ausführung möglich.

In Fig. 4 ist eine Ausführung dargestellt, in der der Tragzapfen 3 axial verstellbar vorgesehen ist, sodaß der Wischerarm 20 beispielsweise aus einer Vertiefung der Karosserie 10 anhebbar wird. Der wiederum gemäß Fig. 1 und 2 topfförmige erste Gehäuseteil 1 weist eine zentrale Hülse 5 auf, in der der Tragzapfen 3 gelagert ist. Seine Betätigung erfolgt mittels eines Stellantriebes 30, der in dieser Ausführung durch eine beheizbare Feder 34 mit Formerinnerungsvermögen und eine Gegenfeder 35 gebildet ist. Die Feder 34 kann dabei entweder für den Hub oder für die Rückführung eingesetzt werden. Der Stellantrieb 30 kann jedoch in jeder beliebigen Art ausgebildet sein, und beispielsweise einen Elektromotor, einen Hubmagneten, eine Druckmittelbetätigung usw. umfassen. Der übrige Aufbau dieser Ausführung entspricht im wesentlichen dem Aufbau der Ausführung nach Fig. 2, wobei der Abdichtflansch 16, das Innenzahnrad 26 und die Verzahnung des Sonnenrades 29 an der Abtriebswelle 14 eine um den Hub bzw. den Verschiebeweg größere Höhe aufweisen.

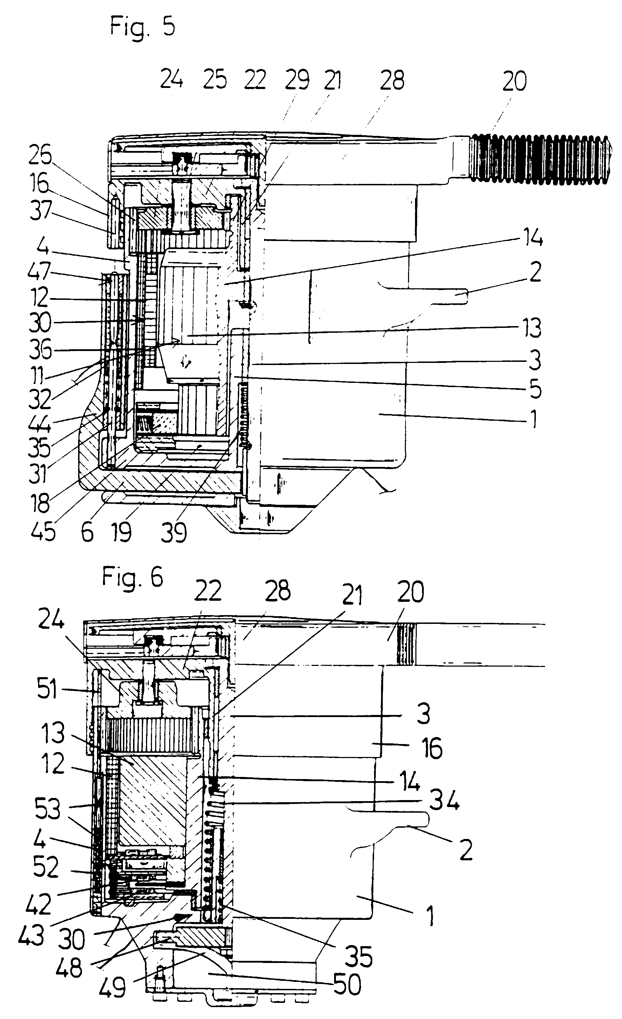

Fig. 5 bis 8 zeigen Ausführungen der Scheibenwischeranlage, die einen längenveränderbaren Wischerarm 20 aufweisen, der in seiner kürzesten Länge in eine außerhalb des Wischfeldes liegende Parkstellung überführbar ist.

In der wiederum die angehobene Stellung zeigenden Ausführung nach Fig. 5 ist der Tragzapfen 3 wiederum in der zentrischen Hülse 5 des topfförmigen ersten Gehäuseteiles 1 verschiebbar gelagert, wobei der hier gezeigte Stellantrieb 30 eine elektromagnetische Hubeinrichtung 36 umfaßt, die an der topfförmigen Wandung 4 des ersten Gehäuseteiles 1 koaxial zum Statorteil 12 angeordnet ist und der Rotorteil 13 des Elektromotors 11 beaufschlagt, der mit dem Tragzapfen 3 axial verschiebbar verbunden ist. Eine Rückstellfeder 39 wirkt der Hubeinrichtung 36 entgegen. Die Verzahnung des Sonnenrades 29 an der Abtriebswelle 14 erfordert keine vergrößerte Höhe, da ja auch die Abtriebswelle 14 mit der Lagerhülse 21 und den Planetenrädern 24 mitverschoben wird, stattdessen ist unterhalb des Rotorteiles 13 ein Freiraum 19 ausgespart. Für die Überführung des Wischerarmes 20 in die Parkstellung ist ein zweiter Stellantrieb 47 vorgesehen. Dieser umfaßt einen mit dem Tragzapfen 3 verdrehfest verbundenen, jedoch nicht mitverschiebbaren Auslegerarm 6, der in einem Schlitz des ersten Gehäuseteiles 1 nach außen geführt ist. Der Auslegerarm 6 weist eine außerhalb der Topfwand 4 parallel verlaufende Hülse 44 auf, in der ein Hubmagnet 32 und ein Riegelstift 31 angeordnet sind. Ein Fortsatz 45 des ersten Gehäuseteiles 1 trägt eine in der Wischstellung des Wischerarmes 20 mit dem Riegelstift 31 fluchtende Bohrung, in die der Riegelstift 31 in der Wischstellung angreift und den Tragzapfen 3 grundkörperfest und damit fahrzeugfest fixiert. Für die überführung in die Parkstellung wird der Riegelstift mittels des Hubmagneten 32 aus dem Fortsatz 45 gelöst und in eine Bohrung 37 des Abdichtflansches 16 eingeführt. Dies erfolgt in einer Stellung des Wischerarmes 20, in der er seine kürzeste Länge aufweist, die bei der nachfolgenden Verschwenkung in die Parkstellung nicht verändert wird. Die vom Elektromotor 11 eingeleitete Verschwenkung verdreht somit über das Planetengetriebe 23, den Riegelstift 31 und den Auslegerarm 6 den Tragzapfen 3 mit der Lagerhülse 21 und den zweiten Gehäuseteil 22 mit, sodaß das im Lagerteil 28 enthaltene Steuergetriebe unwirksam bleibt.

Fig. 6 zeigt eine ähnliche Variante, bei der der Stellantrieb 30 für die Verschiebung des Tragzapfens 3 wiederum eine Feder 34 mit Formerinnerungsvermögen aufweist. Am unteren Ende des verschiebbaren Tragzapfens 3 ist radial ein Arm 48 befestigt, der in eine schraubenlinienförmig über etwa 90° ansteigende Nut 49 der Ausnehmung 50 des ersten Gehäuseteiles 1 eingreift. Der Hub der Feder 34 führt zu einer Verdrehung des Tragzapfens 3, der in dieser Ausführung bei stillstehendem Motor eine Längenänderung des Wischerarmes 20 bewirken würde. Da der Hub des Tragzapfens 3 nur bei der Überführung des Wischerarmes 20 aus der Park- in die Arbeitsstellung erfolgt, währenddessen die Wischerarmlänge gleich bleiben muß, wird die Hubhöhe von einem von einer Feder 52 beaufschlagten Sensor 51 ermittelt, der am Flansch 22 anliegt. Die axiale Mitverschiebung des Sensors 51 wird von Meßspulen 53 erfaßt, und an die Steuerung des Elektromotors weitergegeben, die insbesondere eine Fuzzi-Logik enthält. Diese berechnet aus dem Hub des Sensors 51 den Drehwinkel des Tragzapfens 3, steuert den Elektromotor 11 an, sodaß über das Planetengetriebe 23 die Lagerhülse 21, der zweite Gehäuseteil 22, der Lagerteil 28 und damit der Wischerarm 20 synchron mit dem Tragzapfen 3 verdreht wird, bis die Endstellung des Armes 48 erreicht ist. In beiden Endstellungen erstreckt sich die Nut 49 geringfügig axial, wodurch sich die verdrehfeste Verriegelung des Tragzapfens 3 auf den ersten Gehäuseteil 1 ergibt, die für die Längenänderung des Wischerarmes 20 während der Wischbewegung erforderlich ist.

Zwei weitere Ausführungen, die einen Stellantrieb 47 für die Umschaltung des Wischerantriebs zwischen Arbeitsstellung und Parkstellung aufweisen, zeigen Fig. 7 bis 10. In der Ausführung nach Fig. 7 ist der zwei Wicklungen 56, 57 aufweisende Statorteil 12 des Elektromotors 11 an einer vom ersten Gehäuseteil 1 hochstehenden Ringwand 55 fixiert. Der Rotorteil 13 wird von der mit dem zweiten Gehäuseteil 22 mitdrehenden Außenwand 15 getragen. Innerhalb der Ringwand 55 bleibt Raum für die Drehwinkelmessung mittels einer feststehenden Lichtquelle 42, eines Lichtsensors 43 und eines mit dem Flansch 22 mitdrehenden Lochelementes 41, sowie für die Steuerung 60, die insbesondere eine Fuzzy-Logik enthält. Die beiden Wicklungen 56 und 57 sind unterschiedlich ausgelegt und angeordnet. Durch entsprechende Ansteuerung der beiden Wicklungen wird es möglich, das erzeugbare Drehmoment dem Kräftebedarf anzupassen. Beispielsweise wird in den Umkehrstellungen des Wischerarmes ein bis zu 8-fach höheres Drehmoment benötigt. Durch entsprechende Ausbildung der Wicklungen 56 und 57, wobei auch drei oder mehr Wicklungen vorgesehen werden können, kann somit im mittleren Wischfeldbereich eine kleinere Wicklung gegeben sein, die bis zu den beiden Wendestellungen jeweils verstärkt ist. Die Montage des ersten Gehäuseteiles erfolgt in dieser Ausführung durch eine zentrale Befestigungsmutter 59. Zu diesem Zweck weist der erste Gehäuseteil 1 eine mittlere Bodenschraube 58 auf, die durch eine öffnung eines Teiles der Karosserie 10 hindurchgeführt und an der anderen Seite von der Mutter 59 fixiert ist. In dieser Ausführung ist der Tragzapfen 3 nicht axial verschiebbar, sondern nur drehbar in der zentrischen Hülse 5 des ersten Gehäuseteiles 1 gelagert. Im Tragzapfen 3 ist ein Riegelstift 31 axial verschiebbar, dem ein Stellantrieb 30 zugeordnet ist. Der Stellantrieb 30 besteht wie in den Ausführungen nach Fig. 4 und 6 aus einer Feder 34 mit Formerinnerungsvermögen und einer Rückstellfeder 35, die einen Mitnehmer 33 beaufschlagt, der zu einem Schlitz 7 des Tragzapfens 3 geführt ist. Details der Verstellung werden nachfolgend anhand der Figuren 9 und 10 erläutert.

In der Ausführung nach Fig. 8 bis 10 ist der Tragzapfen 3 ebenfalls nur verdrehbar in der zentrischen Hülse 5 gelagert, und im Tragzapfen ein Riegelstift 31 axial verschiebbar angeordnet, dem ein Stellantrieb 30 zugeordnet ist. Dieser umfaßt einen den aus dem Tragzapfen 3 vorstehenden Abschnitt des Riegelstiftes 31 beaufschlagenden Hubmagneten 32 und eine den Riegelstift 31 entgegengesetzt beaufschlagende Rückstellfeder 35. Am oberen Ende des Riegelstiftes 31 ist ebenfalls ein einen diametralen Schlitz 7 des Tragzapfens 3 durchsetzender Mitnehmer 33 vorgesehen. Sowohl in der Ausführung nach Fig. 7 als auch in der Ausführung nach Fig. 8 trägt der Mitnehmer 33 einen außen- und innenverzahnten Ring 38, der mit dem Riegelstift 31 verschiebbar ist. Die Innenverzahnung des Ringes 38 gleitet dabei in eine Außenverzahnung 9 des Tragzapfens 3. Im oberen Ende der zentrischen Hülse 5 des ersten Gehäuseteiles 1 und im unteren Ende der Lagerhülse 21 sind Ausweitungen ausgebildet, die jeweils eine Innenverzahnung 8 und 27 tragen. Der Tragzapfen 3 ist dadurch je nach Stellung des Ringes 38 entweder mit der zentrischen Hülse 5, also mit den fahrzeugfest montierbaren ersten Gehäuseteil 1 oder mit der Lagerhülse 21 des Wischerarmes 20 verdrehfest verbunden. Der Mitnehmer 33 kann auch den Riegelstift 31 durchsetzen, sodaß er in beiden Richtungen zwangsgeführt ist. Der übrige Aufbau dieser Ausführung entspricht im wesentlichen dem der Ausführung nach Fig. 1 oder 2. Anstelle des Hubmagneten 32 kann auch in dieser Ausführung eine Feder mit Formerinnerungsvermögen eingesetzt werden.

Verschiedene Merkmale der einzelnen Ausführungen lassen sich auch bei anderen Ausführungen anwenden. So kann jede Ausführung mit einer axialen Bewegung statt eines Hubmagneten 32 eine Feder 34 mit Erinnerungsvermögen, einen Elektromotor, eine Verstellung mittels eines Druckmediums usw. aufweisen, wobei auch jeweils der Verstellantrieb und die Rückstellfeder vertauschbar sind. Die zu Fig. 7 beschriebenen zwei bzw. mehr als zwei Wicklungen 56, 57 können auch in der anderen Ausführung vorgesehen werden. Ebenso kann auch das Planetengetriebe 23 in allen Ausführungen eingebaut sein. Falls die direkte Verblockung des zweiten Gehäuseteiles 22 mit dem Wischerarm 20 aus Platzgründen nicht möglich ist, kann die Verbindung zwischen dem sich drehenden zweiten Gehäuseteil 22 und dem Lagerteil 28 des Wischerarmes 20 auch über einen Lenker erfolgen, der die Drehbewegung des Gehäuseteiles 22 auf den an der Karosserie gelagerten Lagerteil 28 überträgt.

## Patentansprüche

1. Scheibenwischeranlage, mit einem schwenkbar gelagerten Wischerarm (20) und mit einem den Wischerarm (20) schwenkenden Antrieb, der einen fahrzeugfest montierbaren, drehrichtungsumkehrbaren Elektromotor (11) und eine den Elektromotor (11) schaltende Steuerung aufweist, dadurch gekennzeichnet, daß ein zweiteiliges Gehäuse (1,22) vorgesehen ist, daß der eine Gehäuseteil (1) den Statorteil (12) des Elektromotors (11) trägt und fahrzeugfest montierbar ist, und daß der zweite Gehäuseteil (22) mit dem Rotorteil (13) versehen, relativ zum ersten Gehäuseteil (1) verdrehbar und mit dem Wischerarm (20) verdrehfest verbunden ist.

2. Scheibenwischeranlage nach Anspruch 1, dadurch gekennzeichnet, daß mit dem zweiten Gehäuseteil (22) eine Lagerhülse (21) verbunden ist, die auf einem Tragzapfen (3) geiagert ist, der auf dem fahrzeugfest montierbaren Gehäuseteil (1) angeordnet ist.

3. Scheibenwischeranlage nach Anspruch 1 oder 2, dadurch gekennzeichnet, daß der fahrzeugfest montierbare Gehäuseteil (1) topfförmig und der mit dem Rotorteil (13) versehene zweite Gehäuseteil (22) deckelartig ausgebildet sind.

4. Scheibenwischeranlage nach Anspruch 3, dadurch gekennzeichnet, daß der Statorteil (12) an der Topfwand (4) des fahrzeugfest montierbaren Gehäuseteiles (1) vorgesehen ist.

5. Scheibenwischeranlage nach Anspruch 2, dadurch gekennzeichnet, daß der Statorteil (12) am Tragzapfen (3) vorgesehen ist, und der zweite Gehäuseteil (22) topfförmig ausgebildet ist und einen außenliegenden Rotorteil (13) bildet.

6. Scheibenwischeranlage nach Anspruch 2, dadurch gekennzeichnet, daß die Lagerhülse (21) die Motorabtriebswelle (14) bildet.

7. Scheibenwischeranlage nach Anspruch 2, dadurch gekennzeichnet, daß zwischen der Motorabtriebswelle (14) und der Lagerhülse (21) ein Zwischengetriebe (23) ausgebildet ist.

8. Scheibenwischeranlage nach Anspruch 4 oder 5 und 7, dadurch gekennzeichnet, daß die Topfwand (4) des fahrzeugfest montierbaren Gehäuseteiles (1) oder der außenliegende Rotorteil (13) mit dem Hohlrad (26) eines Planetengetriebes (23) versehen ist und der zweite Gehäuseteil (22) einen Tragflansch für die Planetenräder (24) aufweist.

9. Scheibenwischeranlage nach einem der Ansprüche 2 bis 8, dadurch gekennzeichnet, daß der Tragzapfen (3) axial verstellbar auf dem fahrzeugfest montierbaren Gehäuseteil (1) angeordnet ist.

10. Scheibenwischeranlage nach einem der Ansprüche 2 bis 9, dadurch gekennzeichnet, daß am Tragzapfen (3) ein in Achsrichtung verstellbarer Mitnehmer (33) vorgesehen ist, der in einer ersten Position den Tragzapfen (3) mit dem fahrzeugfest montierbaren Gehäuseteil (1) und in einer zweiten Position den Tragzapfen (3) mit der Lagerhülse (21) verdrehfest verbindet.

11. Scheibenwischeranlage nach einem der Ansprüche 1 bis 10, dadurch gekennzeichnet, daß die Steuerschaltung des Elektromotors (11) eine Fuzzy-Logik enthält.

12. Scheibenwischeranlage nach einem der Ansprüche 1 bis 11, dadurch gekennzeichnet, daß die Steuerschaltung des Elektromotors (11) ein neuronales Netzwerk enthält.

## Claims

1. A windshield wiper system with a pivotably supported wiper arm (20) and a drive that swivels the wiper arm (20), the drive having a reversible electric motor (11) mounted solidly to the vehicle and a control unit that switches the electric motor (11), characterized in that a two-part housing (1, 22) is provided, that the first housing part (1) carries the stator portion (12) of the electric motor (11) and is mountable solidly to the vehicle, and that the second housing part (22) is provided with the rotor portion (13), is rotatable relative to the first housing part (1), and is connected to the wiper arm (20) in a manner fixed against relative rotation.

2. A windshield wiper system according to claim 1, characterized in that connected to the second housing part (22) is a bearing sleeve (21), which is supported on a supporting lug (3) that is disposed on the housing part (1) that is solidly mounted to the vehicle.

3. A windshield wiper system according to claim 1 or 2, characterized in that the housing part (1) mountable solidly to the vehicle is embodied as cup-shaped, and the second housing part (22) that is provided with the rotor portion (13) is embodied as lidlike.

4. A windshield wiper system according to claim 3, characterized in that the stator portion (12) is provided on the cup wall (4) of the housing part (1) mountable solidly to the vehicle.

5. A windshield wiper system according to claim 2, characterized in that the stator portion (12) is provided on the supporting lug (3), and the second housing part (22) is embodied as cup-shaped and forms an outer rotor portion (13).

6. A windshield wiper system according to claim 2, characterized in that the bearing sleeve (21) forms the motor power take-off shaft (14).

7. A windshield wiper system according to claim 2, characterized in that an intermediate gear (23) is embodied between the motor power take-off shaft (14) and the bearing sleeve (21).

8. A windshield wiper system according to claim 4 or 5 and 7, characterized in that the cup wall (4) of the housing part (1) that is mountable solidly to the vehicle, or the outer rotor portion (13), is provided with the ring gear (26) of a planetary gear (23), and the second housing part (22) has a supporting flange for the planet wheels (24).

9. A windshield wiper system according to one of claims 2-8, characterized in that the supporting lug (3) is disposed axially adjustably on the housing part (1) that is mountable solidly to the vehicle.

10. A windshield wiper system according to one of claims 2-9, characterized in that an axially adjustable pawl (33) is provided on the supporting lug (3), which pawl in a first position connects in a manner fixed against relative rotation the supporting lug (3) to the housing part (1) that is mountable solidly to the vehicle, and in a second position the supporting lug (3) to the bearing sleeve (21).

11. A windshield wiper system according to one of claims 1-10, characterized in that the control circuit of the electric motor (11) includes fuzzy logic.

12. A windshield wiper system according to one of claims 1-11, characterized in that the control circuit of the electric motor (11) includes a neural network.

## Revendications

1. Système d'essuie-glace comprenant un bras d'essuie-glace (20) monté pivotant et un dispositif d'entraînement qui fait pivoter le bras d'essuie-glace (20) et comporte un moteur électrique (11) réversible pouvant être monté solidaire du véhicule et une commande commutant le moteur électrique (11), caractérisé en ce qu'il est prévu un boîtier (1, 22) en deux parties, en ce que l'une (1) des parties du boîtier porte une partie stator (12) du moteur électrique (11) et peut être montée solidaire du véhicule et en ce que la deuxième partie (22) du boîtier est pourvue d'une partie rotor (13), pouvant tourner par rapport à la première partie (1) du boîtier, et liée solidaire en rotation du bras d'essuie-glace (20).

2. Système d'essuie-glace selon la revendication 1, caractérisé en ce qu'un manchon de montage (21) est relié à la deuxième partie (22) du boîtier, lequel manchon est monté sur un embout de support (3) qui est disposé sur la partie de boîtier (1) pouvant être montée solidaire du véhicule.

3. Système d'essuie-glace selon la revendication 1 ou 2, caractérisé en ce que la partie de boîtier (1) pouvant être montée solidaire du véhicule est en forme de pot et la deuxième partie de boîtier (22) pourvue du rotor (13) est en forme de couvercle.

4. Système d'essuie-glace selon la revendication 3, caractérisé en ce que la partie stator (12) est prévue sur la paroi (4) de la partie de boîtier (1), en forme de pot, pouvant être montée solidaire du véhicule.

5. Système d'essuie-glace selon la revendication 2, caractérisé en ce que la partie stator (12) est prévue sur l'embout de support (3) et la deuxième partie (22) du boîtier est en forme de pot et forme un rotor (13) situé à l'extérieur.

6. Système d'essuie-glace selon la revendication 2, caractérisé en ce que le manchon de montage (21) forme l'arbre de sortie (14) du moteur.

7. Système d'essuie-glace selon la revendication 2, caractérisé en ce qu'une transmission intermédiaire (23) est réalisée entre l'arbre de sortie (14) du moteur et le manchon de montage (21).

8. Système d'essuie-glace selon la revendication 4 ou 5 et 7, caractérisé en ce que la paroi (4) du pot de la partie de boîtier (1) pouvant être montée solidaire du véhicule, ou le rotor (13) situé à l'extérieur, est pourvu(e) de la couronne (26) d'un engrenage planétaire (23) et la deuxième partie de boîtier (22) comporte une bride de support pour les satellites (24).

9. Système d'essuie-glace selon l'une des revendications 2 à 8, caractérisé en ce que l'embout de support (3) est disposé avec possibilité de réglage axial sur la partie de boîtier (1) pouvant être montée solidaire du véhicule.

10. Système d'essuie-glace selon l'une des revendications 2 à 9, caractérisé en ce que sur l'embout de support (3), il est prévu un entraîneur (33) qui peut être déplacé dans la direction axiale et qui, dans une première position, relie de manière fixe en rotation l'embout de support (3) à la partie de boîtier (1) pouvant être montée solidaire du véhicule et dans une seconde position, l'embout de support (3) au manchon de montage (21).

11. Système d'essuie-glace selon l'une des revendications 1 à 10, caractérisé en ce que le circuit de commande du moteur électrique (11) contient une logique floue.

12. Système d'essuie-glace selon l'une des revendications 1 à 11, caractérisé en ce que le circuit de commande du moteur électrique (11) contient un réseau neuronal.
